# EUROPÄISCHE PATENTSCHRIFT

(11) **EP 2 998 067 B1**
(45) Veröffentlichungstag und Bekanntmachung des Hinweises auf die Patenterteilung: **05.12.2018**
(21) Anmeldenummer: 15181299.7
(22) Anmeldetag: 17.08.2015
(51) Int. Cl.: B24B 13/00, B23Q 7/04, B23Q 39/00

(54) **SIMULTAN-DREHMASCHINE FÜR DIE BRILLENGLASFERTIGUNG**
SIMULTANEOUS ROTATING MACHINE FOR THE MANUFACTURE OF SPECTACLES GLASS
MACHINE TOURNANTE SIMULTANEE POUR LA FABRICATION DE VERRE DE LUNETTE

(30) Priorität: 17.09.2014 DE 102014113421
(43) Veröffentlichungstag der Anmeldung: 23.03.2016
(73) Patentinhaber: OptoTech Optikmaschinen GmbH, 35435 Wettenberg (DE)
(72) Erfinder: Mandler, Roland, 35452 Heuchelheim (DE)
(74) Vertreter: Patentanwälte Olbricht Buchhold Keulertz

(56) Entgegenhaltungen:
- EP-A1- 1 175 962
- EP-A1- 1 719 582
- EP-A2- 0 737 544
- EP-A2- 1 647 360
- EP-A2- 1 719 585
- EP-A2- 2 308 644
- DE-A1-102006 050 425
- DE-A1-102007 043 421
- DE-A1-102007 045 039
- DE-A1-102010 045 151
- DE-A1-102012 004 547
- US-A1- 2002 006 764

## Beschreibung

Die Erfindung betrifft eine Fertigungseinrichtung zur Herstellung von Brillengläsern aus Linsenrohlingen und ein Verfahren zum Betrieb einer solchen Fertigungsvorrichtung.
Im Stand der Technik werden zur Herstellung von Brillengläsern Linsenrohlinge eingesetzt, insbesondere Linsenrohlinge aus Kunststoffen wie Polycarbonat, CR39 und sogenannten "High Index" Materialien. Die Linsenrohlinge werden zur Herstellung einer individuellen Oberfläche, z.B. zur Herstellung von Brillengläsern auf Rezept, aus Effizienzgründen zweistufig spanend bearbeitet, nämlich erst mit einem Fräswerkzeug und anschließend mit einem Drehwerkzeug. Es existieren kombinierte Fräs-Dreh-Werkzeuge [EP 1 291 106 A] und Maschinen mit separaten Fräs- und (linear oder rotativ arbeitenden) Dreh-Bearbeitungseinheiten. Bei letzteren werden die Brillengläser entweder seriell bearbeitet [EP 1 719 585 A] - ein und dasselbe Brillenglas wird im Arbeitsraum der Maschine zuerst gefräst und anschließend gedreht - oder parallel bearbeitet [EP 1 719 582 A1] - verschiedene Brillenglaser werden im Arbeitsraum der Maschine zugleich bearbeitet, wobei eines gefräst wird, während das andere gedreht wird -.

So ist beispielsweise eine Fertigungseinrichtung aus DE 20 2006 021 076 U1 bekannt, bei der eine Maschine auf einem Maschinengestell eine Werkstückaufnahme auf einem Schlitten, ein Fräswerkzeug und zwei Drehwerkzeuge aufweist. Die Werkstückaufnahme nimmt einen Linsenrohling mittelbar über ein Blockstück auf. Es ist jedoch auch eine unmittelbare Aufnahme ohne Blockstück denkbar. Die Werkstückaufnahme wird mit dem Schlitten zunächst in einen Arbeitsbereich des Fräswerkzeugs gefahren und der aufgenommene Linsenrohling fräsend bearbeitet. Anschließend wird die Werkstückaufnahme in einen Arbeitsbereich des ersten Drehwerkzeugs gefahren und der Linsenrohling drehend bearbeitet. Danach wird die Werkstückaufnahme in einen Arbeitsbereich des zweiten Drehwerkzeugs gefahren und der Linsenrohling ein weiteres Mal drehend bearbeitet. Hierdurch sind eine sphärische, asphärische, torische, atorische, progressive oder Freiformgeometrien erzeugbar. In der Regel schließen sich an die spanende Bearbeitung Feinschleif- oder Polierprozesse zur Erzielung der notwendigen Oberflächengüte an. Bei Bedarf erfolgen auch noch Beschichtungen und/oder Verfestigungsschritte.

Nachteilhaft an einer Vorrichtung gemäß DE 20 2006 021 076 U1 ist, dass nur wenige Linsenrohlinge pro Zeiteinheit bearbeitbar sind. Hierdurch sind die Herstellkosten pro bearbeitetem Linsenrohling hoch.

Die Vorrichtung nach EP 1 719 582 A1 unterscheidet sich unter anderem dadurch von DE 20 2006 021 076 U1, dass die Dreheinheit eine Werkstückspindel und die Fräseinheit eine separate Werkstückaufnahme aufweisen. Hierdurch wird erreicht, dass zwei Linsenrohlinge gleichzeitig bearbeitet werden, nämlich eines mit dem Fräswerkzeug und eines mit dem Drehwerkzeug. Mittels einer Ladeeinrichtung wird der gefräste Linsenrohling aus der Werkstückaufnahme entnommen und unmittelbar anschließend in die Werkstückspindel eingesetzt, während gleichzeitig ein neuer Linsenrohling in die Werkstückaufnahme eingesetzt wird.

Hierdurch wird die Effizienz der Fertigungseinrichtung gesteigert und die Herstellkosten pro bearbeiteten Linsenrohling gegenüber DE 20 2006 021 076 U1 gesenkt. Allerdings ist die Effizienz immer noch gering und die Herstellkosten pro bearbeitetem Linsenrohling hoch. Außerdem werden Schwingungen von der Fräseinheit auf die Dreheinheit übertragen wodurch die Präzision des Drehprozesses gering ist.
Aufgabe der Erfindung ist es, die Nachteile des Standes der Technik zu beseitigen, und eine Vorrichtung sowie ein Verfahren bereitzustellen, mit denen jeweils eine qualitativ hochwertige Bearbeitung der Linsenrohlinge, eine Steigerung der Effizienz und eine Senkung der Herstellkosten pro bearbeitetem Linsenrohling erreicht werden. Die Erfindung soll zuverlässig, einfach in der Handhabung und kostengünstig sein.

Die Erfindung ist im Anspruch 1 definiert. Vorteilhaft ist, dass durch die vorgesehenen wenigstens zwei Drehstationen gleichzeitig zumindest zwei Linsenrohlinge simultan drehend bearbeitet werden können. Hierfür sollten die Drehstationen simultan betreibbar sein. Dies führt zu einer besonders hohen Effizienz der Drehvorrichtung und geringen Herstellungskosten pro bearbeitetem Linsenrohling, weil ein vorgelagerter Fräsprozess pro Linsenrohling, welcher naturgemäß gröbere Fertigungstoleranzen aufweist, regelmäßig weniger Zeit in Anspruch nimmt als der Drehprozess, welcher eine hochpräzise Oberfläche erzeugt. Typischerweise beträgt der Fräsprozess circa 40% und der Drehprozess circa 60% der Gesamtbearbeitungszeit. Durch die zwei Drehstationen sind die Taktzeiten der Fräsvorrichtung und der Drehvorrichtung gut aufeinander abgestimmt. Weil das Fräswerkzeug erfindungsgemäß typischerweise nicht auf das Drehwerkzeug warten muss, steigt der Durchsatz bearbeitbarer Linsen pro Zeiteinheit erheblich an. Dabei ist kaum mehr Platz für die Drehvorrichtung erforderlich und die Drehvorrichtung mit einer Vielzahl an Fräsvorrichtungen kombinierbar, insbesondere ohne dass beispielsweise eine Splittung der Fertigungsstraße von einem Fräswerkzeug auf zwei Drehmaschinen erfolgen müsste. Die Drehvorrichtung weist vorzugsweise eine CNC-Steuerung auf, um möglichst automatisiert arbeiten zu können.

Die Fertigungseinrichtung weist eine Ladevorrichtung auf, die dazu ausgestaltet ist, Linsenrohlinge in die Werkstückspindeln zu laden. Damit ist das Laden automatisiert und einfach durchführbar. Bevorzugt entlädt die Ladevorrichtung die Werkstückspindeln zusätzlich.
In einer speziellen Variante der Ladevorrichtung ist pro Drehstation jeweils ein Paar Haltemittel zur Aufnahme von zwei Linsenrohlingen vorgesehen, wobei die Haltemittel der Paare winklig zueinander ausgerichtet und miteinander verbunden sind, und wobei die Paare der Haltemittel um eine gemeinsame Drehachse drehbar gelagert sind. Hierdurch ist ein sehr schneller Austausch von Linsenrohlingen in den Werkstückspindeln möglich. Die Effizienz der Drehvorrichtung ist so besonders hoch. Solche Paare an Haltemittel bzw. die Drehachse können an einem Transportarm gelagert sein, insbesondere für eine Parallelverschiebung der Drehachse. Für die winklige Verbindung der Paare bietet sich eine rechtwinklige Anordnung der zwei Haltemittel 34 an. Bevorzugt ist die Drehachse senkrecht zu den Spindelachsen der Werkstückspindeln ausgerichtet. Außerdem entspricht der Abstand zwischen den Paaren der Haltemittel vorzugsweise dem Abstand zwischen den Spindelachsen. Damit sind nur wenige Bewegungsabläufe für einen Linsenrohlingswechsel durchzuführen und entsprechend wenig Aktuatoren notwendig.
Weiterhin sieht eine Variante der Erfindung vor, dass die Werkstückspindeln parallel ausgerichtete Spindelachsen aufweisen. Damit wird eine kompakte Ausgestaltung der Drehvorrichtung ermöglicht und die Werkstückspindeln sowie die Ladevorrichtung haben eine unkomplizierte Bewegungskinematik. Die Werkstückspindeln können sich insbesondere Aktuatoren/Antriebe teilen. Aus den gleichen Gründen sind die Werkstückspindeln bevorzugt in einer gemeinsamen Spindelebene angeordnet.
Darüber hinaus besteht die Option, dass die Drehstationen, vorzugsweise die Werkstückspindeln, einen gemeinsamen Querantrieb aufweisen, mit dem der Abstand der Drehwerkzeuge relativ zur Spindelachse einer zugeordneten Werkstückspindel veränderbar ist, insbesondere quer zur Spindelachse bzw. durch eine Verschiebung in der Spindelebene. Mithin können die Drehstationen platzsparend nebeneinander angeordnet werden, denn Kollisionen sind nicht möglich, insbesondere wenn die Drehwerkzeuge auf einem gemeinsamen Querschlitten angeordnet sind. Ein gemeinsamer Querantrieb ist zudem kostengünstig realisierbar. Optional können die Werkstückspindeln zum Linsenrohlingswechsel seitlich aus dem Arbeitsbereich der Drehwerkzeuge herausfahren. Ferner sind die Drehwerkzeuge vorzugsweise parallel zueinander ausgerichtet. Außerdem sollten die Drehwerkzeuge in einer gemeinsamen Werkzeugebene angeordnet sein. Alternativ oder zusätzlich können auch die Drehwerkzeuge einen gemeinsamen zweiten Querantrieb aufweisen, insbesondere wenn die Drehwerkzeuge auf einem gemeinsamen zweiten Querschlitten angeordnet sind.

In einer speziellen Ausgestaltung ist vorgesehen, dass die Drehstationen einen gemeinsamen Maschinenrahmen und/oder ein gemeinsames Maschinenbett aufweisen. Gemäß einer anderen bevorzugten Ausgestaltung liegen die Drehwerkzeuge in einem gemeinsamen Arbeitsraum. Beides trägt zu einer kompakten Ausgestaltung bei und alle Teile der Drehvorrichtung sind präzise zueinander positioniert. Auch Sicherheitsvorrichtungen sind nur einfach vorzusehen.

Eine weitere Ausgestaltungsoption besteht dahingehend, dass die Drehstationen, vorzugsweise die Werkstückspindeln, einen gemeinsamen Linearantrieb aufweisen können, mit dem der Abstand der Drehwerkzeuge relativ zu einer zugeordneten Werkstückspindel veränderbar ist, insbesondere in Achsrichtung der Spindelachsen bzw. durch eine Parallelverschiebung der Spindelebene. Mithin ist nur ein Linearantrieb notwendig, insbesondere wenn die Werkstückspindeln auf einem gemeinsamen Längsschlitten gelagert sind. Dies ist kostengünstig. Alternativ oder zusätzlich können auch die Drehwerkzeuge einen gemeinsamen zweiten Linearantrieb aufweisen, insbesondere wenn die Drehwerkzeuge auf einem gemeinsamen zweiten Längsschlitten angeordnet sind.

Der Längsschlitten und der Querschlitten können dabei als Kreuztischanordnung ausgebildet sein. Auch der optionale zweite Längsschlitten und zweite Querschlitten können als zweite Kreuztischanordnung ausgebildet sein.

Alternativ können die Werkstückspindeln und/oder die Drehwerkzeuge auch unabhängige Linear- und/oder Querantriebe aufweisen. Hierdurch würde eine besonders hohe Flexibilität erreicht, wodurch gleichzeitig zwei sich stärker unterscheidende Oberflächentopografien gedreht werden könnten.

Außerdem sieht eine spezielle Ausführungsform der Drehvorrichtung vor, dass jedes Drehwerkzeug jeweils einen eigenen Fast-Tool-Servomotor aufweist, mit dem die Zustelltiefe gegenüber einer zugeordneten Werkstückspindel veränderbar ist. Mithin können die Drehwerkzeuge unabhängig voneinander zugestellt und so unterschiedliche Oberflächentopografien an den Linsenrohlingen hergestellt werden.
Bevorzugt weist der Linearantrieb einen maximalen ersten Stellweg und die Fast-Tool-Servomotoren einen maximalen zweiten Stellweg auf, wobei der maximale erste Stellweg wenigstens dem 10fachen des maximalen zweiten Stellwegs entspricht. Damit ist es möglich, mit dem großen ersten Stellweg des Linearantriebs eine grobe und im Wesentlichen rotationssymmetrische Oberflächentopografie, insbesondere an jedem Linsenrohling in der Drehvorrichtung, herzustellen. Gleichzeitig übernehmen die Fast-Tool-Servomotoren mit dem kleinen zweiten Stellweg die Individualisierung der Oberflächentopografie. Dabei sind nicht-rotationssymmetrische Oberflächentopografien erzeugbar, die insbesondere auch unterschiedlich zwischen den Drehstationen ausgebildet sein können. Besonders geeignet ist eine spezielle Ausgestaltung der Drehvorrichtung, bei welcher der Fast-tool-Servomotor einen Piezoantrieb aufweist. Piezoantriebe sind besonders schnell und präzise.
Ferner ist eine optionale Ausgestaltung vorgesehen, bei der die Drehvorrichtung eine Steuerelektronik zur Ausgabe von Antriebssignalen an die Werkstückspindeln, den Querantrieb, den Linearantrieb und die Fast-Tool-Servomotoren aufweist, wobei die Antriebssignale von der Steuerelektronik aufeinander abgestimmt sind. Hierdurch gelingt es auch bei gemeinsamen Quer- und Linearantrieben, die gewünschten Oberflächentopografien herzustellen. Entsprechend sollten die Antriebssignale von der Steuerelektronik zur simultanen Herstellung von unterschiedlichen Oberflächentopografien an den Linsenrohlingen aufeinander abgestimmt sein.

Vorteilhaft an der erfindungsgemäßen Fertigungseinrichtung ist, dass durch die vorgesehenen wenigstens zwei Drehstationen und durch die Unabhängigkeit des Werkstückhalters von den Werkstückspindeln gleichzeitig zumindest zwei Linsenrohlinge simultan drehend und einer fräsend bearbeitet werden können. Dies führt zu einer besonders hohen Effizienz der Fertigungseinrichtung und geringen Herstellungskosten pro bearbeitetem Linsenrohling. Weil das Fräswerkzeug erfindungsgemäß typischerweise kaum oder gar nicht auf das Drehwerkzeug warten muss, steigt der Durchsatz bearbeitbarer Linsen pro Zeiteinheit erheblich an. Die Fertigungseinrichtung weist vorzugsweise eine gemeinsame CNC-Steuerung auf.

Die Fräsvorrichtung ist vorzugsweise nicht nur zur Bearbeitung der Linsenoberfläche sondern auch zur Bearbeitung des Linsenumfangs geeignet. Hierfür können ein Flächenfräser, insbesondere ein Kugelkopffräser, für die Oberflächenbearbeitung und ein Randfräser, insbesondere ein Fingerfräser, für die Umfangsbearbeitung vorgesehen sein. Bevorzugt sind beide unabhängig und simultan antreibbar bzw. angetrieben.

In einer näheren Ausgestaltung der Fertigungseinrichtung ist vorgesehen, dass die Drehvorrichtung 1,5mal bis 2,5mal so viele Drehstationen aufweist wie die Fräsvorrichtung Frässtationen. Hierdurch lassen sich die Bearbeitungsgeschwindigkeit der Drehvorrichtung und der Fräsvorrichtung derart aufeinander abstimmen, dass nur sehr geringe Wartezeiten für die Fräsvorrichtung und die Drehvorrichtung bestehen.

Gemäß einer speziellen Variante der Fertigungseinrichtung weist die Fräsvorrichtung genau eine Frässtation und die Drehvorrichtung genau zwei Drehstationen auf. Dies bewirkt bei vertretbaren Herstellkosten für die Fertigungseinrichtung eine hohe Effizienz.

Grundsätzlich können die Drehvorrichtung und die Fräsvorrichtung unabhängige Maschinen sein, die entlang einer Fertigungsstraße an unterschiedlichen Positionen angeordnet sind. Vorhandene Dreh- und/oder Fräsvorrichtung können hierdurch miteinander kombiniert werden.

Für eine kompakte Ausgestaltung der Fertigungseinrichtung und eine präzise relative Anordnung zueinander bietet sich eine Ausgestaltung an, bei der die Fräsvorrichtung und die Drehvorrichtung einen gemeinsamen Maschinenrahmen und/oder ein gemeinsames Maschinenbett aufweisen. Ein gemeinsames Maschinenbett kostet wenig, kann monolithisch ausgebildet sein und alle Maschinenteile sind korrekt zueinander positioniert. Gemäß einer speziellen Ausführung weisen die Fräsvorrichtung, die Drehvorrichtung und die Ladevorrichtung einen gemeinsamen Maschinenrahmen und/oder ein gemeinsames Maschinenbett auf. Damit ist auch die Ladevorrichtung präzise relativ zu der Dreh- und zu der Fräsvorrichtung positioniert. In einer abweichenden Variante ist vorgesehen, dass die Fräsvorrichtung und die Drehvorrichtung schwingungsentkoppelt sind, vorzugsweise durch über den Boden getrennte Fundamente. Damit werden keine Schwingungen von der Fräsvorrichtung auf die Drehvorrichtung übertragen und die Präzision der gedrehten Fläche ist hoch. Hierzu tragen auch getrennte Maschinenbetten der Fräs- und der Drehvorrichtung bei. Außerdem ist der Transport aufgrund geringerer Einzelgewichte einfacher. Getrennte Maschinenbetten können zwar über einen optionalen gemeinsamen Maschinenrahmen relativ zueinander positioniert sein. Bevorzugt bildet jedoch der Boden die einzige mechanische Verbindung zwischen der Fräsvorrichtung und der Drehvorrichtung aus. Die Ladevorrichtung ist bevorzugt wenigstens mechanisch von der Fräsvorrichtung oder wenigstens mechanisch von der Fräsvorrichtung getrennt. Eine mechanische Verbindung der Ladevorrichtung zum Boden kann jeweils vorgesehen sein.

Die Fertigungseinrichtung ist kostengünstig bereitstellbar, wenn die Fräsvorrichtung und die Drehvorrichtung in einer gemeinsamen Fertigungszelle angeordnet sind. Vorzugsweise ist auch die Ladevorrichtung in der Fertigungszelle angeordnet. Die Fertigungszelle sollte eine Gehäusehülle aufweisen, innerhalb derer die Drehvorrichtung und die Ladevorrichtung angeordnet sind. Arbeitssicherheitseinrichtungen wie Zugangssperren müssen dann nur einmal für beide Vorrichtungen vorgesehen werden. Bevorzugt ist die Fertigungszelle schwingungsentkoppelt von der Drehvorrichtung und/oder der Fräsvorrichtung.

Zum Schutz der hochpräzisen Drehvorrichtung bietet sich eine Ergänzung der Fertigungseinrichtung derart an, dass die Fräsvorrichtung und die Drehvorrichtung in getrennten Arbeitsräumen angeordnet sind, wobei die Arbeitsräume vorzugsweise zumindest hinsichtlich eines Spanübertritts voneinander getrennt sind. Dies gelingt entweder durch hinreichende Distanz zwischen der Fräsvorrichtung und der Drehvorrichtung oder durch mechanische Trennmittel wie Spanschilder, Klappen oder Gehäuse, jeweils zwischen der Fräsvorrichtung und der Drehvorrichtung.

Gemäß einer näheren Ausgestaltung der Ladevorrichtung weist diese ein Transportmittel zum Transport eines Linsenrohlings von der Frässtation zu den Drehstationen auf. Bevorzugt ist das Transportmittel zwischen den Werkstückhaltern und den Werkstückspindeln bewegbar gelagert. Für kurze Strecken und ein präzises Positionieren eignen sich Transportarme mit Greifern oder Saugern. Längere Strecken können mit Rutschen, Förderbändern oder Förderschienen überbrückt werden. An deren Enden kann wiederum ein Transportarm zur Übergabe der Linsenrohlinge zu oder von den Werkstückspindeln und/oder Werkstückhaltern vorgesehen sein.

Damit ein Linsenrohling aus dem Werkstückhalter entnommen werden kann, auch wenn Linsenrohlinge in den Werkstückspindeln gehalten werden, sollte die Ladevorrichtung einen Linsenspeicher für wenigstens einen Linsenrohling, vorzugsweise für wenigstens zwei Linsenrohlinge, aufweist. Insbesondere sollte die Ladevorrichtung so viele Linsenrohlinge aufnehmen können, wie die Drehvorrichtung Drehstationen aufweist. Damit können wenigstens so viele vorgefräste Linsenrohlinge bereitgehalten werden, wie in die Werkstückspindeln eingelegt werden können. Besonders bevorzugt weist die Ladevorrichtung einen Linsenspeicher für wenigstens doppelt so viele Linsenrohling auf wie die Drehvorrichtung Drehstationen. Damit kann die Ladevorrichtung, vorzugsweise ein Transportarm, gleichzeitig zwei neue Linsenrohlinge und zwei drehend bearbeitete Linsenrohlinge aufnehmen. Diese erlaubt einen besonders schnellen Wechsel der Linsenrohlinge.

Des Weiteren betrifft die Erfindung ein Verfahren zum Betrieb einer Fertigungseinrichtung wie sie zuvor beschrieben ist, bei dem folgende Schritte durchgeführt werden:
a) Laden eines ersten Linsenrohlings in den Werkstückhalter und spanende Bearbeitung des ersten Linsenrohlings mit dem Fräswerkzeug;
b) Anschließende Entnahme des ersten Linsenrohlings aus dem Werkstückhalter mit der Ladevorrichtung;
c) Anschließendes Laden eines zweiten Linsenrohlings in den Werkstückhalter und spanende Bearbeitung des zweiten Linsenrohlings mit dem Fräswerkzeug;
d) Anschließende Entnahme des zweiten Linsenrohlings aus dem Werkstückhalter mit der Ladevorrichtung;
e) Laden des ersten und des zweiten Linsenrohlings in die Werkstückspindeln mit der Ladevorrichtung, vorzugsweise gleichzeitig, und Laden eines dritten Linsenrohlings in den Werkstückhalter;
f) Simultane spanende Bearbeitung des dritten Linsenrohlings mit dem Fräswerkzeug und des ersten und des zweiten Linsenrohlings mit den Drehwerkzeugen.

Man erkennt, dass durch dieses Verfahren erreicht wird, dass in einem bestimmten Zeitfenster zwei Linsenrohlinge drehend und ein Linsenrohling fräsend bearbeitet werden. Die Durchnummerierung der Linsenrohlinge hat nichts mit der Abarbeitungsfolge des Verfahrens zu tun. Es kommt ausschließlich darauf an, dass zwei Linsenrohlinge drehend bearbeitet werden, während ein dritter Linsenrohling fräsend bearbeitet wird. Unerheblich ist daher beispielsweise, ob die Ladevorrichtung einen Linsenspeicher für mehrere Linsenrohlinge aufweist und zwischen dem ersten, zweiten und dritten Linsenrohling andere Linsenrohlinge bearbeitet werden.

Vorteilhaft an dem Verfahren ist, dass eine besonders hohe Effizienz der Fertigungseinrichtung und geringe Herstellungskosten pro bearbeitetem Linsenrohling erreicht werden. Durch die Anzahl an Drehstationen pro Frässtation sind die Wartezeiten des Fräs- und oder des Drehwerkzeugs reduzierbar. Dadurch ist der Durchsatz bearbeitbarer Linsen pro Zeiteinheit hoch. Vorzugsweise belässt man mit dem Fräsprozess ein Aufmaß für den Drehprozess von 0,2 mm bis 0,3 mm gegenüber der zu erzielenden Oberflächentopografie. Es besteht grundsätzlich die Möglichkeit mit dem Fräswerkzeug eine rotationssymmetrische Oberfläche zu erzeugen, oder bereits eine nicht-rotationssymmetrische Oberflächentopografie zu erzeugen. Im letzteren Fall stellt bereits die Fräsvorrichtung eine Freiformfläche her, wenn eine solche später zu drehen ist.

Bevorzugt wird auch die Umfangsgeometrie des Linsenrohlings mit dem Fräswerkzeug bearbeitet. Hierdurch ist bereits zu diesem Zeitpunkt eine an eine Brillenglasfassung angepasste Umfangsgeometrie fertigbar. Zur Vermeidung von Ausbrüchen am Linsenrand beim späteren Ein- und Ausfahren des Drehmeißels sollte mit dem Fräswerkzeug eine schräge Fase am Umfang des Linsenrohlings hergestellt werden.

Gemäß einer näheren Verfahrensausgestaltung ist als Schritt g) vorgesehen, dass eine Entnahme des dritten Linsenrohlings aus dem Werkstückhalter mit der Ladevorrichtung sowie ein Laden eines vierten Linsenrohlings in den Werkstückhalter und eine spanende Bearbeitung des vierten Linsenrohlings mit dem Fräswerkzeug (alles) während der spanenden Bearbeitung des ersten und des zweiten Linsenrohlings mit den Drehwerkzeugen erfolgen. Damit wird erreicht, dass das Fräswerkzeug nicht auf das Drehwerkzeug warten muss, welches im typischen Anwendungsfall pro Linsenrohling länger braucht als das Fräswerkzeug.

Das Verfahren kann optional durch folgende Schritte fortgesetzt werden:
h) Entnahme des ersten und des zweiten Linsenrohlings aus den Werkstückspindeln;
i) Anschließendes Laden eines oder des dritten und eines oder des vierten Linsenrohlings in die Werkstückspindeln mit der Ladevorrichtung und Laden eines fünften Linsenrohlings in den Werkstückhalter;
j) Wiederholung der Schritte f) bis i).

Damit wird eine Endlosschleife erreicht, die zu einem hohen Durchsatz an bearbeiteten Linsenrohlingen führt. Die Wiederholung der Schritte f) bis i) erfolgt unter Anpassung der Nummerierung der Linsenrohlinge.

In einer speziellen Verfahrensvariante ist vorgesehen, dass die Drehstationen einen gemeinsamen Querantrieb aufweisen, mit dem der Abstand der Drehwerkzeuge relativ zur Spindelachse einer zugeordneten Werkstückspindel veränderbar ist, und dass die Drehstationen einen gemeinsamen Linearantrieb aufweisen, mit dem der Abstand der Drehwerkzeuge relativ zu einer zugeordneten Werkstückspindel veränderbar ist, wobei jedes Drehwerkzeug jeweils einen eigenen Fast-Tool-Servomotor aufweist, mit dem die Zustelltiefe gegenüber einer zugeordneten Werkstückspindel veränderbar ist, wobei die Drehvorrichtung eine Steuerelektronik zur Ausgabe von Antriebssignalen an die Werkstückspindeln, den Querantrieb, den Linearantrieb und die Fast-Tool-Servomotoren aufweist, wobei die Antriebssignale von der Steuerelektronik aufeinander abgestimmt sind, und wobei die Steuerelektronik die Antriebssignale so aufeinander abstimmt, dass die Antriebsignale für die Fast-Tool-Servomotoren zur Schwingungsdämpfung einen wenigstens zeitweisen gegenläufigen Betrieb der Fast-Tool-Servomotoren bewirken.

Damit können die Schwingungen durch die schnell agierenden Fast-Tool-Servomotoren gezielt gegenseitig ausgeglichen/abgemildert werden. Dies gelingt beispielsweise indem die Antriebsignale für die Fast-Tool-Servomotoren einen gegenläufigen Betrieb der Fast-Tool-Servomotoren zumindest an einem im Verhältnis zur restlichen Oberflächentopografie großen Stellgradienten der Zustelltiefe bewirken. Als große Stellgradienten sollen die 20% der größten Stellgradienten einer herzustellenden Oberflächentopografie pro Umdrehung der Werkstückspindel angesehen werden. Insbesondere durch Modulation der Drehgeschwindigkeiten der Werkstückspindeln lässt sich der Rhythmus der Fast-Tool-Servomotoren aufeinander abstimmen.

Verfahrensgemäß sollte die Steuerelektronik zur Schwingungsdämpfung Antriebssignale an die Werkstückspindeln ausgeben, die einen Gegenlauf oder einen Gleichlauf der Werkstückspindeln bewirken. Eine Entscheidungslogik für die Drehrichtung und Drehgeschwindigkeit der Werkstückspindeln wird anhand einer Schwingungssimulation vorgenommen.

Sofern individuelle Oberflächentopografien an allen Linsenrohlingen herzustellen sind, erfolgt die Abstimmung der Antriebssignale für jedes zu bearbeitende Paar an Linsenrohlingen. Vorzugsweise ist die Abstimmung bereits vor dem Laden des Paares an Linsenrohlingen in die Werkstückspindeln zumindest teilweise festgelegt.

Gemäß einer bevorzugten Verfahrensgestaltung werden in den Drehstationen simultan unterschiedliche Oberflächentopografien an den Linsenrohlingen hergestellt. Dies trägt der meist notwendigen individuellen Korrektur von Sehfehlern eines Auges Rechnung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Drehvorrichtung;
- Fig. 2: eine perspektivische Ansicht einer Drehvorrichtung bei entferntem Gehäuse;
- Fig. 3: eine Seitenansicht einer Drehvorrichtung;
- Fig. 4: eine Seitenansicht einer Drehvorrichtung bei entferntem Gehäuse; und
- Fig. 5: eine Schemaskizze einer Fertigungseinrichtung mit einer Drehvorrichtung und einer Fräsvorrichtung.

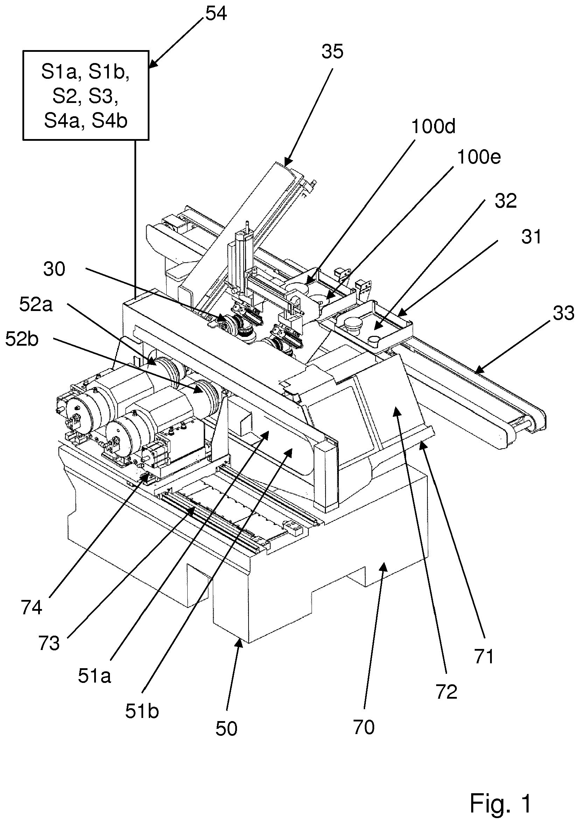

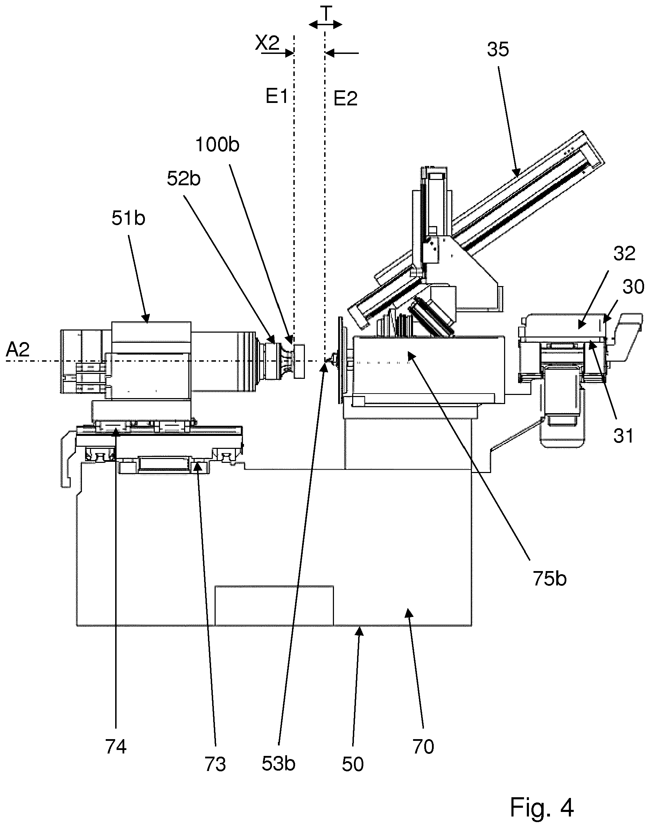

Die **Fig. 1**, **2**, **3** **und** **4** zeigen aus unterschiedlichen perspektivischen Ansichten eine Drehvorrichtung 50, welche über zwei Drehstationen 51a, 51b verfügt. Nicht alle technischen Merkmale und damit auch nicht alle Bezugszeichen sind in jeder der Figuren 1 bis 4 sichtbar. Die erste Drehstation 51a hat eine drehbare erste Werkstückspindel 52a zur Aufnahme eines ersten Linsenrohlings 100a und ein erstes Drehwerkzeug 53a zur spanenden Bearbeitung des aufgenommenen Linsenrohlings 100a. Gleichzeitig verfügt die zweite Drehstation 52b über eine drehbare zweite Werkstückspindel 52b zur Aufnahme eines zweiten Linsenrohlings 100b und ein zweites Drehwerkzeug 53b zur spanenden Bearbeitung des aufgenommenen zweiten Linsenrohlings 100b. Dabei haben die erste und die zweite Werkstückspindeln 52a, 52b parallel ausgerichtete Spindelachsen A1, A2. Außerdem sind die erste und die zweite Werkstückspindel 52a, 52b in einer gemeinsamen Spindelebene E1 angeordnet. Die Drehstationen 51a, 51b sind vom gleichen Typ und zur Bearbeitung von Linsenrohlingen 100a, 100b des gleichen Typs ausgebildet. Insbesondere sind die Werkstückspindeln 51a, 51b (weitestgehend) identisch ausgestaltet sowie die Drehwerkzeuge 53a, 53b (weitestgehend) identisch ausgestaltet.

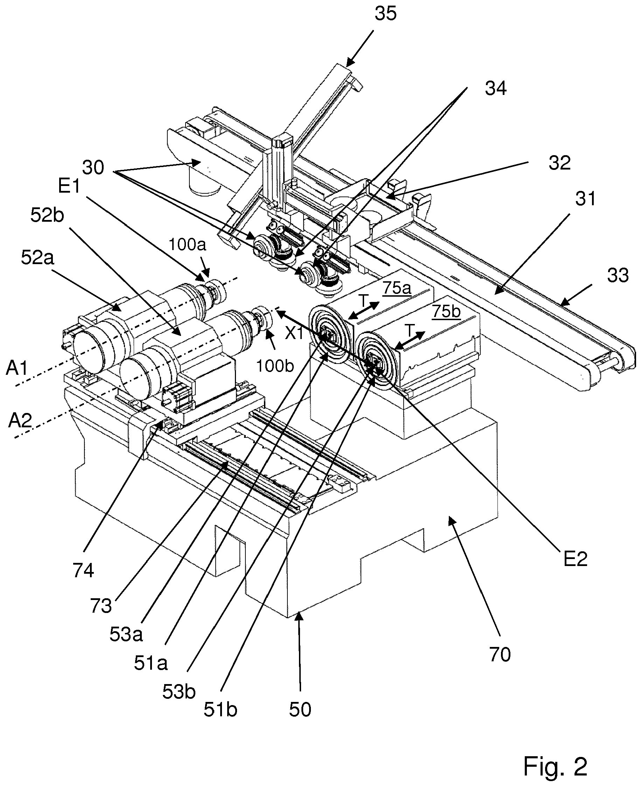

Die erste und zweite Werkstückspindel 52a, 52b der beiden Drehstationen 51a, 51b sind auf einem gemeinsamen Maschinenbett 70 montiert, welches monolithisch ausgebildet ist. Außerdem verfügen die beiden Drehstationen 51a, 51b über einen gemeinsamen Querantrieb 73, mit dem der Abstand X1 der Drehwerkzeuge 53a, 53b relativ bzw. quer zur Spindelachse A1, A2 einer zugeordneten Werkstückspindel 52a, 52b veränderbar ist. Hierfür sind die erste und die zweite Werkstückspindel 52a, 52b auf einem gemeinsamen Querschlitten montiert. Hierdurch können die Werkstückspindeln 52a, 52b zum Linsenrohlingswechsel auch seitlich aus dem Arbeitsraum der Drehwerkzeuge 53a, 53b herausfahren wie man in Fig. 2 sieht.

Zusätzlich haben die Drehstationen 51a, 51b, insbesondere die Werkstückspindeln 52a, 52b, einen gemeinsamen Linearantrieb 74, mit dem der Abstand X2 der Drehwerkzeuge 53a, 53b relativ zu einer zugeordneten Werkstückspindel 52a, 52b veränderbar ist, insbesondere in axialer Richtung der Spindelachsen A1, A2. Dafür sind die beiden Werkstückspindeln 52a, 52b auf einem gemeinsamen Längsschlitten montiert. Der Längsschlitten wiederum ist auf dem Querschlitten montiert, welcher wiederum auf dem Maschinenbett 70 gelagert ist. Dadurch ergibt sich eine Kreuztischanordnung auf dem Maschinenbett 70.

Optional können die Werkstückspindeln 52a, 52b und/oder die Drehwerkzeuge 53a, 53b auch unabhängige Linear- und/oder Querantriebe 73, 74 aufweisen. Wenn unabhängige Linear- und Querantriebe 73, 74 vorgesehen sind, ergeben sich zwei unabhängige Kreuztischanordnungen. Es würde eine besonders hohe Flexibilität erreicht, um gleichzeitig zwei sich stärker unterscheidende Oberflächentopografien drehen zu können.

Beide Drehwerkzeuge 53a, 53b haben einen eigenen Fast-Tool-Servomotor 75a, 75b mit Piezoantrieb, mit dem die Zustelltiefe T gegenüber einer zugeordneten Werkstückspindel 52a, 52b veränderbar ist. Die Fast-Tool-Servomotoren 75a, 75b sind fest mit dem Maschinenbett 70 verbunden. Auch die Drehwerkzeuge 53a, 53b, insbesondere Drehmeißel oder Schneidplatten, sind parallel zueinander ausgerichtet und in einer gemeinsamen Werkzeugebene E2 angeordnet. Der maximale Stellweg des Linearantriebs 74 ist wenigstens 10mal so groß wie der maximale Stellweg der Fast-Tool-Servomotoren 75a, 75b bzw. der damit angetriebenen Drehmeißel/Schneidplatten.

Beide Drehstationen 51a, 51b sind gleichzeitig betreibbar. Mit dem Kreuzschlitten können gleichzeitig zwei Linsenrohlinge 100a, 100b rotierend vor den Drehwerkzeugen 53a, 53b positioniert werden. Indem die Drehvorrichtung 50 eine Steuerelektronik 54 zur Ausgabe von Antriebssignalen S1a, S1b, S2, S3, S4a, S4b an die Werkstückspindeln 52a, 52b, den Querantrieb 73, den Linearantrieb 74 und die Fast-Tool-Servomotoren 75a, 75b aufweist (siehe hierzu Fig. 1), und die Antriebssignale S1a, S1b, S2, S3, S4a, S4b von der Steuerelektronik 54 aufeinander abgestimmt sind, lassen sich gleichzeitig unterschiedliche Oberflächentopografien an den beiden Linsenrohlingen 100a, 100b herstellen.

Des Weiteren ist eine Ladevorrichtung 30 vorgesehen, die dazu ausgestaltet ist, Linsenrohlinge 100a, 100b, 100d, 100e in die Werkstückspindeln 52a, 52b zu laden. Hierfür verfügt die Ladevorrichtung 30 über Transportmittel 31 und einen Linsenspeicher 32. Zu den Transportmitteln 31 zählen eine Förderschiene 33 und Haltemittel 34 an einem Transportarm 35. Die Haltemittel 34 haben Saugköpfe. Die optionale und spezielle Ausgestaltung der Ladevorrichtung 30 sieht vor, dass vier Haltemittel 34 an dem Transportarm 35 gelagert sind. Jeweils zwei der vier Haltemittel 34 sind winklig miteinander verbunden, hier insbesondere rechtwinklig. Beide Paare der Haltemittel 34 sind um eine gemeinsame Drehachse drehbar gelagert. Die Drehachse ist senkrecht zu den Spindelachsen A1, A2 ausgerichtet. Außerdem entspricht der Abstand zwischen den Paaren der Haltemittel 34 dem Abstand zwischen den Spindelachsen A1, A2. Auf der Förderschiene 33 sind Schlitten/Wagen angeordnet, mit denen größere Distanzen zurückgelegt werden können. Die Schlitten/Wagen bilden gemeinsam mit den Haltemitteln 34 den Linsenspeicher 32.

Mit dieser Anordnung der Ladevorrichtung 30 ist es möglich, gleichzeitig zwei vorgefräste Linsenrohlinge aufzunehmen, insbesondere jeweils einen Linsenrohling pro Paar der Haltemittel 34. Mit den beiden freien Haltemitteln 34 sind dann zwei Linsenrohlinge 100a, 100b aus den Werkstückspindeln 52a, 52b entnehmbar. Nach Rotation der Haltemittelpaare um 90 Grad sind die zuvor aufgenommenen Linsenrohlinge in die Werkstückspindeln 52a, 52b ladbar. Die fertig gedrehten Linsenrohlinge 100a, 100b werden dann in den freien Schlitten/Wagen abgelegt. Zwei neue vorgefräste Linsenrohlinge werden anschließend mit einem neuen Schlitten/Wagen bereitgestellt und können mit den Haltemitteln 34 aufgenommen werden. Das Be- und Entladen der Werkstückspindeln 52a, 52b ist so besonders schnell und die Effizienz der Drehvorrichtung 50 hoch. Es versteht sich, dass der Drehwinkel der Haltemittelpaare von deren Schenkelwinkel abhängt und nicht exakt 90 Grad betragen muss.

Mit der Förderschiene 33 ist die Drehvorrichtung 50 auf einfache Weise mit anderen Maschinen verbindbar, zum Beispiel mit Fräsvorrichtungen und/oder Beschichtungsvorrichtungen. Die Ladevorrichtung 30 oder Teile hiervon sollte mit dem Maschinenbett 70 verbunden sein. Eine feste Verbindung mit dem Maschinenbett 70 sollte insbesondere der Transportarm 35 haben. Hierdurch ist dieser exakt relativ zu den Werkstückspindeln 52a, 52b ausgerichtet. Die Förderschiene wird vorzugsweise schwingungsentkoppelt mit dem Maschinenbett 70 oder einem zusätzlichen Maschinenrahmen verbunden.

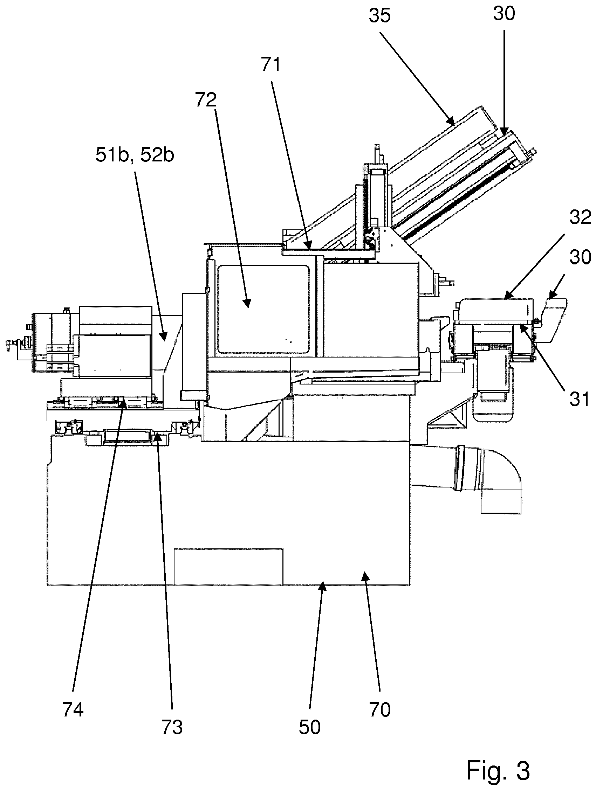

Wie man in den Fig. 1 und 3 sieht, sind die beiden Drehstationen 51a, 51b der Drehvorrichtung 50 in einer gemeinsamen Fertigungszelle 71 angeordnet. Die Fertigungszelle 71 wird von einer Gehäusehülle 72 ausgebildet. Zwischen den Drehstationen 51a, 51b liegt nur ein Freiraum, jedoch keine mechanischen Elemente. Spanschilder oder dergleichen sind jedoch optional vorsehbar. Der Transportarm 35 verbindet die Förderschiene 33 außerhalb der Fertigungszelle 71 mit den innerhalb der Fertigungszelle 71 angeordneten Werkstückspindeln 52a, 52b. Hierdurch kann die Drehvorrichtung 50 mit einer Fräsvorrichtung kombiniert werden, wobei die Drehstationen 51a, 51b in einem Arbeitsraum angeordnet ist, der unabhängig vom Fräswerkzeug ist. Mithin wird ein Spanübertritt zwischen der Dreh- und der Fräsvorrichtung ausgeschlossen.

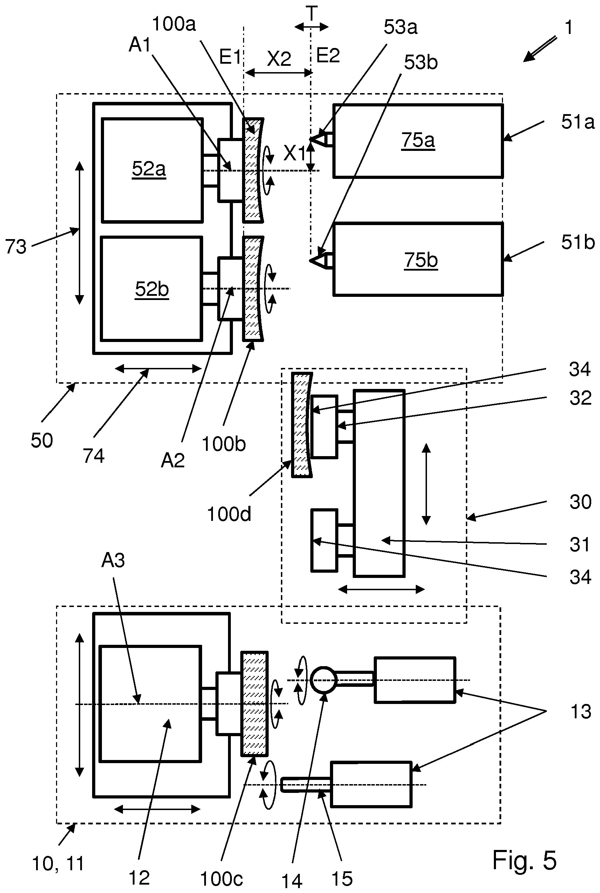

Eine Fertigungseinrichtung 1 zur Herstellung von Brillengläsern aus Linsenrohlingen 100a, 100b, 100c, 100d, 100e, mit einer Fräsvorrichtung 10 und einer Drehvorrichtung 50 ist in einer Schemaskizze der **Fig. 5** gezeigt.

Von der Drehvorrichtung 50 erkennt man insbesondere exakt zwei Drehstationen 51a, 51b. Die beiden Drehstationen 51a, 51b weisen jeweils eine drehbare Werkstückspindel 52a zur Aufnahme eines Linsenrohlings 100a, 100b, 100c, 100d, 100e und ein Drehwerkzeug 53a, 53b zur spanenden Bearbeitung eines aufgenommenen Linsenrohlings 100a, 100b, 100c, 100d, 100e auf.

Die Werkstückspindeln 52a, 52b haben parallel ausgerichtete Spindelachsen A1, A2 und sind in einer gemeinsamen Spindelebene E1 angeordnet. Mittels einem gemeinsamen Querantrieb 73 können die Werkstückspindeln 52a, 52b in der Spindelebene E1 derart bewegt werden, dass der Abstand X1 der Drehwerkzeuge 53a, 53b relativ zur Spindelachse A1, A2 einer zugeordneten Werkstückspindel 52a, 52b veränderbar ist.

Außerdem verfügen die Werkstückspindeln 52a, 52b über einen gemeinsamen Linearantrieb 74, mit dem der Abstand X2 der Drehwerkzeuge 53a, 53b relativ zu einer zugeordneten Werkstückspindel 52a, 52b veränderbar ist, insbesondere durch eine Parallelverschiebung der Spindelebene E1.

Gegenüber von den Werkstückspindeln 51a, 51b sind die Drehwerkzeuge 53a, 53b ortsfest gelagert. Die beiden Drehmeißel der Drehwerkzeuge 53a, 53b liegen mit ihren Schneidkanten 55a, 55b in der Ebene der Spindelachsen A1, A2 der beiden Werkstückspindeln 52a, 52b. Zudem entspricht der Abstand zwischen den Schneidkanten 55a, 55b der Drehmeißel dem Abstand zwischen den beiden Spindelachsen A1, A2. Man erkennt, dass auch die beiden Drehwerkzeuge 53a, 53b parallel zueinander ausgerichtet und in einer gemeinsamen Werkzeugebene E2 angeordnet sind, insbesondere betrifft dies die Drehmeißel. Jedes Drehwerkzeug 53a, 53b verfügt über einen eigenen Fast-Tool-Servomotor 75a, 75b mit einem Piezoantrieb, mit dem die Zustelltiefe T der Schneidkanten der Drehmeißel 53a, 53b gegenüber einer zugeordneten Werkstückspindel 52a, 52b veränderbar ist. Der Linearantrieb 74 hat einen maximalen ersten Stellweg und die Drehmeißel 53a, 53b einen maximalen zweiten Stellweg, wobei der maximale erste Stellweg wenigstens dem 10fachen des maximalen zweiten Stellwegs entspricht.

Hierdurch sind die Drehstationen 51a, 51b simultan betreibbar. Dennoch können gleichzeitig unterschiedliche Oberflächentopografien an den Linsenrohlingen 100a, 100b gedreht werden. Letzteres insbesondere durch die schnelle und unabhängige Modulation der Zustelltiefe T.

Des Weiteren sieht man in Fig. 5 die Fräsvorrichtung 10 mit exakt einer einzigen Frässtation 11. An einem Werkstückhalter 12 der Frässtation 11 ist ein dritter Linsenrohling 100c aufgenommen. In vorliegendem Fall hat der Werkstückhalter 12 einen Spindelantrieb zum Rotieren des Linsenrohlings 100c um eine Drehachse A3. Der Werkstückhalter 12 ist Längs- und Querrichtung bewegbar gelagert, insbesondere durch eine Kreuztischanordnung.

Gegenüber dem Werkstückhalter 12 ist ein positionsfestes Fräswerkzeug 13 positioniert. Das Fräswerkzeug 13 weist einen Flächenfräser 14, insbesondere mit Kugelkopffräser, mit einem erstem Antrieb und einen Randfräser 15, insbesondere mit Fingerfräser, mit einem zweiten Antrieb auf.

Durch Bewegungen des Werkstückhalters 12 in Längs- und Querrichtung sowie Rotation des dritten Linsenrohlings 100c wird letzterer entweder in den Flächenfräser 14 oder in den Randfräser 15 gefahren. Auf diese Weise wird die Oberfläche oder den Umfang des dritten Linsenrohlings 100c fräsend bearbeitet.

Verbunden sind die Drehvorrichtung 50 und die Fräsvorrichtung 10 über eine Ladevorrichtung 30, die dazu ausgestaltet ist, Linsenrohlinge 100a, 100b, 100c, 100d aus der Fräsvorrichtung 10 zu entnehmen und in die Werkstückspindeln 52a, 52b zu laden. Ein bewegbar gelagertes Transportmittel 31 weist hierzu mehrere Haltemittel 34 auf, insbesondere zwei. Hierdurch bildet das Transportmittel 31 auch einen Linsenspeicher 32 aus, in dem gefräste Linsenrohlinge, hier ein vierter Linsenrohling 100d, vor dem Laden in die Werkstückspindeln 52a, 52b zwischengelagert werden.

Die Drehvorrichtung 50 und die Ladevorrichtung 30 können optional wie in den Fig. 1 bis 4 ausgeführt sein.

Es besteht zudem die Ausgestaltungsoption, die Fräsvorrichtung 10, die Drehvorrichtung 50 und unter Umständen auch die Ladevorrichtung 30 auf einem gemeinsamen Maschinenrahmen und/oder einem gemeinsamen Maschinenbett 70 zu montieren. Ein gemeinsames Maschinenbett 70 wäre vorzugsweise monolithisch auszubilden. Zu bevorzugen ist jedoch eine mechanische Schwingungsentkopplung zwischen der Fräsvorrichtung 10 und der Drehvorrichtung 50, insbesondere durch über den Boden getrennte Fundamente.

Wenn die Fräsvorrichtung 10, die Drehvorrichtung 50 und vorzugsweise die Ladevorrichtung 30 in einer gemeinsamen Fertigungszelle 71 angeordnet werden, sind Sicherheitsvorkehrungen und Gehäuse nur einfach vorzusehen. Bevorzugt liegen die Fräsvorrichtung 10 und die Drehvorrichtung 50 außerdem in getrennten Arbeitsräumen, wobei die Arbeitsräume vorzugsweise zumindest hinsichtlich eines Spanübertritts voneinander getrennt sind.

Mit einer solchen Fertigungseinrichtung 1 sind die erfindungsgemäßen Verfahren ausführbar. Insbesondere ist es möglich, zunächst einen ersten Linsenrohlings 100a in den Werkstückhalter 12 zu laden und spanend mit dem Fräswerkzeug 13 zu bearbeiten. Anschließend wird der erste Linsenrohling 100a mit der Ladevorrichtung 30 aus dem Werkstückhalter 12 entnommen, bevor ein zweiter Linsenrohling 100b in den Werkstückhalter 12 geladen und mit dem Fräswerkzeug 13 zerspant wird. Nachdem auch der zweite Linsenrohling 100b mit der Ladevorrichtung 30 aus dem Werkstückhalter 12 entnommen ist, können der erste und zweite Linsenrohling 100a, 100b mit der Ladevorrichtung 30 in die Werkstückspindeln 52a, 52b geladen werden. Anschließend ist eine simultane spanende Bearbeitung eines dritten Linsenrohlings 100c mit dem Fräswerkzeug 13 und des ersten und des zweiten Linsenrohlings 100a, 100b mit den Drehwerkzeugen 53a, 53b möglich.
Hinsichtlich der weiteren Verfahrensausgestaltungsmöglichkeiten wird auf die vorstehende allgemeine Beschreibung und die Ansprüche verwiesen.

**Bezugszeichenliste**

| | | | |
|---|---|---|---|
| 1 | Fertigungseinrichtung | | |
| | | 100a | erster Linsenrohling |
| 10 | Fräsvorrichtung | 100b | zweiter Linsenrohling |
| 11 | Frässtation | 100c | dritter Linsenrohling |
| 12 | Werkstückhalter | 100d | vierter Linsenrohling |
| 13 | Fräswerkzeug | 100e | fünfter Linsenrohling |
| 14 | Flächenfräser | | |
| 15 | Randfräser | A1 | Spindelachse (erste Werkstückspindel) |
| 30 | Ladevorrichtung | A2 | Spindelachse (zweite |
| 31 | Transportmittel | | Werkstückspindel) |
| 32 | Linsenspeicher | A3 | Drehachse (Werkstückhalter) |
| 33 | Förderschiene | E1 | Spindelebene |
| 34 | Haltemittel | | (Werkstückspindeln) |
| 35 | Transportarm | E2 | Werkzeugebene (Drehwerkzeuge) |
| 50 | Drehvorrichtung | S1a | Antriebssignal (erste |
| 51a | erste Drehstation | | Werkstückspindel) |
| 51b | zweite Drehstation | S1b | Antriebssignal (zweite |
| 52a | erste Werkstückspindel | | Werkstückspindel) |
| 52b | zweite Werkstückspindel | S2 | Antriebssignal (Querantrieb) |
| 53a | erstes Drehwerkzeug | S3 | Antriebssignal (Linearantrieb) |
| 53b | zweites Drehwerkzeug | S4a | Antriebssignal (erster Fast-Tool-Servomotor) |
| 54 | Steuerelektronik | | |
| | | S4b | Antriebssignal (zweiter Fast-Tool-Servomotor) |
| 70 | Maschinenbett | | |
| 71 | Fertigungszelle | T | Zustelltiefe (Fast-Tool-Servomotor) |
| 72 | Gehäusehülle | | |
| 73 | Querantrieb | X1 | Abstand (Drehwerkzeuge - Spindelachse) |
| 74 | Linearantrieb | | |
| 75a | erster Fast-Tool-Servomotor | X2 | Abstand (Drehwerkzeug - Werkstückspindel) |
| 75b | zweiter Fast-Tool-Servomotor | | |

## Patentansprüche

1. **Fertigungseinrichtung (1)** zur Herstellung von Brillengläsern aus Linsenrohlingen (100a, 100b, 100c, 100d, 100e), mit einer Fräsvorrichtung (10) und einer Drehvorrichtung (50),
• wobei die Drehvorrichtung (50) eine erste Drehstation (51a) mit einer drehbaren ersten Werkstückspindel (52a) zur Aufnahme eines Linsenrohlings (100a, 100b, 100c, 100d, 100e) und ein erstes Drehwerkzeug (53a) zur spanenden Bearbeitung eines aufgenommenen Linsenrohlings (100a, 100b, 100c, 100d, 100e) aufweist, und wobei die Drehvorrichtung (50) wenigstens eine zweite Drehstation (52b) mit einer drehbaren zweiten Werkstückspindel (52b) zur Aufnahme eines zweiten Linsenrohlings (100a, 100b, 100c, 100d, 100e) und ein zweites Drehwerkzeug (53b) zur spanenden Bearbeitung eines aufgenommenen zweiten Linsenrohlings (100a, 100b, 100c, 100d, 100e) aufweist,
• wobei die Fräsvorrichtung (10) wenigstens eine Frässtation (11) mit einem Werkstückhalter (12) zur Aufnahme eines Linsenrohlings (100a, 100b, 100c, 100d, 100e) und einem Fräswerkzeug (13) zur spanenden Bearbeitung des aufgenommenen Linsenrohlings (100a, 100b, 100c, 100d, 100e) aufweist, und
• wobei eine Ladevorrichtung (30) vorgesehen ist, die dazu ausgestaltet ist, Linsenrohlinge (100a, 100b, 100c, 100d, 100e) aus der Fräsvorrichtung (10) zu entnehmen und in die Werkstückspindeln (52a, 52b) zu laden.

2. Fertigungseinrichtung (1) nach Anspruch 1, **dadurch gekennzeichnet, dass** die Drehvorrichtung (50) 1,5mal bis 2,5mal so viele Drehstationen (51a, 51b) aufweist wie die Fräsvorrichtung (10) Frässtationen (11).

3. Fertigungseinrichtung (1) nach einem der Ansprüche 1 oder 2, **dadurch gekennzeichnet, dass** die Fräsvorrichtung (10) genau eine Frässtation (11) und die Drehvorrichtung (50) genau zwei Drehstationen (51a, 51b) aufweisen.

4. Fertigungseinrichtung (1) nach einem der Ansprüche 1 bis 3, **dadurch gekennzeichnet, dass** die Fräsvorrichtung (10) und die Drehvorrichtung (50) einen gemeinsamen Maschinenrahmen und/oder ein gemeinsames Maschinenbett (70) aufweisen.

5. Fertigungseinrichtung (1) nach einem der Ansprüche 1 bis 3, **dadurch gekennzeichnet, dass** die Fräsvorrichtung (10) und die Drehvorrichtung (50) schwingungsentkoppelt sind, vorzugsweise durch über den Boden getrennte Fundamente.

6. Fertigungseinrichtung (1) nach einem der Ansprüche 1 bis 5, **dadurch gekennzeichnet, dass** die Fräsvorrichtung (10) und die Drehvorrichtung (50) in einer gemeinsamen Fertigungszelle (71) angeordnet sind.

7. Fertigungseinrichtung (1) nach einem der Ansprüche 1 bis 6, **dadurch gekennzeichnet, dass** die Fräsvorrichtung (10) und die Drehvorrichtung (50) in getrennten Arbeitsräumen angeordnet sind, wobei die Arbeitsräume vorzugsweise zumindest hinsichtlich eines Spanübertritts voneinander getrennt sind.

8. Fertigungseinrichtung (1) nach einem der Ansprüche 1 bis 7, **dadurch gekennzeichnet, dass** die Ladevorrichtung (30) Transportmittel (31) zum Transport eines Linsenrohlings (100a, 100b, 100c, 100d, 100e) von der Frässtation (11) zu den Drehstationen (51a, 51b) aufweist.

9. Fertigungseinrichtung (1) nach einem der Ansprüche 1 bis 8, **dadurch gekennzeichnet, dass** die Ladevorrichtung (30) einen Linsenspeicher (32) für wenigstens einen Linsenrohling (100a, 100b, 100c, 100d, 100e) aufweist.

10. Fertigungseinrichtung (1) nach einem der Ansprüche 1 bis 9, **dadurch gekennzeichnet, dass** die Ladevorrichtung (30) der Drehvorrichtung (50) pro Drehstation (52a, 52b) jeweils ein Paar Haltemittel (34) zur Aufnahme von zwei Linsenrohlingen (100a, 100b, 100c, 100d, 100e) aufweist, wobei die Haltemittel (34) der Paare winklig zueinander ausgerichtet und miteinander verbunden sind, und wobei die Paare der Haltemittel (34) um eine gemeinsame Drehachse drehbar gelagert sind.

11. Fertigungseinrichtung (1) nach einem der vorhergehenden Ansprüche, **dadurch gekennzeichnet, dass** die Werkstückspindeln (52a, 52b) der Drehvorrichtung (50) parallel ausgerichtete Spindelachsen (A1, A2) aufweisen.

12. Fertigungseinrichtung (1) nach einem der vorhergehenden Ansprüche, **dadurch gekennzeichnet, dass** die Werkstückspindeln (52a, 52b) der Drehvorrichtung (50) in einer gemeinsamen Spindelebene (E1) angeordnet sind.

13. Fertigungseinrichtung (1) nach einem der vorhergehenden Ansprüche, **dadurch gekennzeichnet, dass** die Drehstationen (51a, 51b) der Drehvorrichtung (50), vorzugsweise die Werkstückspindeln (52a, 52b), einen gemeinsamen Querantrieb (73) aufweisen, mit dem der Abstand (X1) der Drehwerkzeuge (53a, 53b) relativ zur Spindelachse (A1, A2) einer zugeordneten Werkstückspindel (52a, 52b) veränderbar ist.

14. Fertigungseinrichtung (1) nach einem der vorhergehenden Ansprüche, **dadurch gekennzeichnet, dass** die Drehstationen (51a, 51b) der Drehvorrichtung (50), vorzugsweise die Werkstückspindeln (52a, 52b), einen gemeinsamen Linearantrieb (74) aufweisen, mit dem der Abstand (X2) der Drehwerkzeuge (53a, 53b) relativ zu einer zugeordneten Werkstückspindel (52a, 52b) veränderbar ist.

15. Fertigungseinrichtung (1) nach einem der vorhergehenden Ansprüche, **dadurch gekennzeichnet, dass** jedes Drehwerkzeug (53a, 53b) der Drehvorrichtung (50) jeweils einen eigenen Fast-Tool-Servomotor (75a, 75b) aufweist, mit dem die Zustelltiefe (T) gegenüber einer zugeordneten Werkstückspindel (52a, 52b) veränderbar ist.

16. Fertigungseinrichtung (1) nach den Ansprüchen 14 und 15, **dadurch gekennzeichnet, dass** der Linearantrieb (74) der Drehvorrichtung (50) einen maximalen ersten Stellweg und die Fast-Tool-Servomotoren (75a, 75b) einen maximalen zweiten Stellweg aufweisen, wobei der maximale erste Stellweg wenigstens dem 10fachen des maximalen zweiten Stellwegs entspricht.

17. Fertigungseinrichtung (1) nach den Ansprüchen 13 bis 15 oder 13 bis 16, **dadurch gekennzeichnet, dass** die Drehvorrichtung (50) eine Steuerelektronik (54) zur Ausgabe von Antriebssignalen (S1a, S1b, S2, S3, S4a, S4b) an die Werkstückspindeln (52a, 52b), den Querantrieb (73), den Linearantrieb (74) und die Fast-Tool-Servomotoren (75a, 75b) aufweist, wobei die Antriebssignale (S1a, S1b, S2, S3, S4a, S4b) von der Steuerelektronik (54) aufeinander abgestimmt sind.

18. **Verfahren** zum Betrieb einer Fertigungseinrichtung (1) nach einem der Ansprüche 1 bis 17, **gekennzeichnet durch** folgende Schritte:
a) Laden eines ersten Linsenrohlings (100a) in den Werkstückhalter (12) und spanende Bearbeitung des ersten Linsenrohlings (100a) mit dem Fräswerkzeug (13);
b) Anschließende Entnahme des ersten Linsenrohlings (100a) aus dem Werkstückhalter (12) mit der Ladevorrichtung (30);
c) Anschließendes Laden eines zweiten Linsenrohlings (100b) in den Werkstückhalter (12) und spanende Bearbeitung des zweiten Linsenrohlings (100b) mit dem Fräswerkzeug (13);
d) Anschließende Entnahme des zweiten Linsenrohlings (100b) aus dem Werkstückhalter (12) mit der Ladevorrichtung (30);
e) Laden des ersten und des zweiten Linsenrohlings (100a,100b) in die Werkstückspindeln (52a, 52b) mit der Ladevorrichtung (30) und Laden eines dritten Linsenrohlings (100c) in den Werkstückhalter (12);
f) Simultane spanende Bearbeitung des dritten Linsenrohlings (100c) mit dem Fräswerkzeug (13) und des ersten und des zweiten Linsenrohlings (100a, 100b) mit den Drehwerkzeugen (53a, 53b).

19. Verfahren nach Anspruch 18, **gekennzeichnet durch** folgende Schritte:
g) Entnahme des dritten Linsenrohlings (100c) aus dem Werkstückhalter (12) mit der Ladevorrichtung (30) sowie Laden eines vierten Linsenrohlings (100d) in den Werkstückhalter (12) und spanende Bearbeitung des vierten Linsenrohlings (100d) mit dem Fräswerkzeug (13) während der spanenden Bearbeitung des ersten und des zweiten Linsenrohlings (100a, 100b) mit den Drehwerkzeugen (53a, 53b).

20. Verfahren nach Anspruch 19, **gekennzeichnet durch** folgende Schritte:
h) Entnahme des ersten und des zweiten Linsenrohlings (100a, 100b) aus den Werkstückspindeln (52a, 52b);
i) Anschließendes Laden eines oder des dritten und eines oder des vierten Linsenrohlings (100c,100d) in die Werkstückspindeln (52a, 52b) mit der Ladevorrichtung (30) und Laden eines fünften Linsenrohlings (100e) in den Werkstückhalter (12);
j) Wiederholung der Schritte f) bis i).

21. Verfahren nach einem der Ansprüche 18 bis 20 und zum Betrieb der Drehvorrichtung (50), **dadurch gekennzeichnet, dass** die Steuerelektronik (54) die Antriebssignale (S1a, S1b, S2, S3, S4a, S4b) so aufeinander abstimmt, dass die Antriebsignale (S4a, S4b) für die Fast-Tool-Servomotoren (75a, 75b) zur Schwingungsdämpfung einen wenigstens zeitweisen gegenläufigen Betrieb der Fast-Tool-Servomotoren (75a, 75b) bewirken.

## Claims

1. **Manufacturing device (1)** for producing eyeglass lenses made of lens blanks (100a, 100b, 100c, 100d, 100e) having a milling device (10) and a rotating device (50),
- wherein the rotating device (50) comprises a first rotating station (51a) with a rotatable first workpiece spindle (52a) to receive a lens blank (100a, 100b, 100c, 100d, 100e) and a first rotating tool (53a) to machine a received lens blank (100a, 100b, 100c, 100d, 100e), and wherein the rotating device (50) comprises at least one second rotating station (52b) with a rotatable second workpiece spindle (52b) to receive a second lens blank (100a, 100b, 100c, 100d, 100e) and a second rotating tool (53b) to machine a received second lens blank (100a, 100b, 100c, 100d, 100e),
- wherein the milling device (10) comprises at least one milling station (11) with a workpiece holder (12) to receive a lens blank (100a, 100b, 100c, 100d, 100e) and a milling tool (13) to machine the received lens blank (100a, 100b, 100c, 100d, 100e), and
- wherein a loading device (30) is provided configured to remove lens blanks (100a, 100b, 100c, 100d, 100e) from the milling device (10) and to load them into the workpiece spindles (52a, 52b).

2. Manufacturing device (1) according to claim 1, **characterised in that** the rotating device (50) comprises 1.5 to 2.5 times as many rotating stations (51a, 51b) as the milling device (10) comprises milling stations (11).

3. Manufacturing device (1) according to any one of claims 1 or 2, **characterised in that** the milling device (10) comprises exactly one milling station (11) and the rotating device (50) comprises exactly two rotating stations (51a, 51b).

4. Manufacturing device (1) according to any one of claims 1 to 3, **characterised in that** the milling device (10) and the rotating device (50) comprise a common machine frame and/or a common machine bed (70).

5. Manufacturing device (1) according to any one of claims 1 to 3, **characterised in that** the milling device (10) and the rotating device (50) are vibration-decoupled, preferably by bases separated via the bottom.

6. Manufacturing device (1) according to any one of claims 1 to 5, **characterised in that** the milling device (10) and the rotating device (50) are arranged in a common manufacturing cell (71).

7. Manufacturing device (1) according to any one of claims 1 to 6, **characterised in that** the milling device (10) and the rotating device (50) are arranged in separate work areas, wherein the work areas are separated from one another preferably at least with respect to a shaving transfer.

8. Manufacturing device (1) according to any one of claims 1 to 7, **characterised in that** the loading device (30) comprises transport means (31) to transport a lens blank (100a, 100b, 100c, 100d, 100e) from the milling station (11) to the rotating stations (51a, 51b).

9. Manufacturing device (1) according to any one of claims 1 to 8, **characterised in that** the loading device (30) comprises a lens storage unit (32) for at least one lens blank (100a, 100b, 100c, 100d, 100e).

10. Manufacturing device (1) according to any one of claims 1 to 9, **characterised in that** the loading device (30) of the rotating device (50) for each rotating station (52a, 52b) comprises respectively one pair of retaining means (34) to receive two lens blanks (100a, 100b, 100c, 100d, 100e), wherein the retaining means (34) of the pair are aligned at an angle to one another and are connected to one another and wherein the pair of retaining means (34) are rotatably mounted around a common rotational axis.

11. Manufacturing device (1) according to any one of the preceding claims, **characterised in that** the workpiece spindles (52a, 52b) of the rotating device (50) comprise spindle axes (A1, A2) aligned in parallel.

12. Manufacturing device (1) according to any one of the preceding claims, **characterised in that** the workpiece spindles (52a, 52b) of the rotating device (50) are arranged in a common spindle plane (E1).

13. Manufacturing device (1) according to any one of the preceding claims, **characterised in that** the rotating stations (51a, 51b) of the rotating device (50), preferably the workpiece spindles (52a, 52b), comprise a common transverse drive (73), with which the distance (X1) of the rotating tools (53a, 53b) is modifiable relative to the spindle axis (A1, A2) of an associated workpiece spindle (52a, 52b).

14. Manufacturing device (1) according to any one of the preceding claims, **characterised in that** the rotating stations (51a, 51b) of the rotating device (50), preferably the workpiece spindles (52a, 52b), comprise a common linear drive (74), with which the distance (X2) of the rotating tools (53a, 53b) is modifiable relative to an associated workpiece spindle (52a, 52b).

15. Manufacturing device (1) according to any one of the preceding claims, **characterised in that** each rotating tool (53a, 53b) of the rotating device (50) respectively comprises a separate fast tool servomotor (75a, 75b), with which the delivery depth (T) is modifiable with respect to an associated workpiece spindle (52a, 52b).

16. Manufacturing device (1) according to claims 14 and 15, **characterised in that** the linear drive (74) of the rotating device (50) comprises a maximum first travel and the fast tool servomotors (75a, 75b) comprise a maximum second travel, wherein the maximum first travel corresponds to at least 10 times the maximum second travel.

17. Manufacturing device (1) according to claims 13 to 15 or 13 to 16, **characterised in that** the rotating device (50) comprises a control electronics (54) to emit drive signals (S1a, S1b, S2, S3, S4a, S4b) to the workpiece spindles (52a, 52b), the transverse drive (73), the linear drive (74) and the fast tool servomotors (75a, 75b), wherein the drive signals (S1a, S1b, S2, S3, S4a, S4b) are adjusted to one another by the control electronics (54).

18. **Method** for operating a manufacturing device (1) according to any one of claims 1 to 17, **characterised by** the following steps:
a) loading a first lens blank (100a) into the workpiece holder (12) and machining the first lens blank (100a) with the milling tool (13);
b) subsequently removing the first lens blank (100a) from the workpiece holder (12) with the loading device (30);
c) subsequently loading a second lens blank (100b) into the workpiece holder (12) and machining the second lens blank (100b) with the milling tool (13);
d) subsequently removing the second lens blank (100b) from the workpiece holder (12) with the loading device (30);
e) loading the first and the second lens blank (100a, 100b) into the workpiece spindles (52a, 52b) with the loading device (30) and loading a third lens blank (100c) into the workpiece holder (12);
f) simultaneously machining the third lens blank (100c) with the milling tool (13) and the first and second lens blank (100a, 100b) with the rotating tools (53a, 53b).

19. Method according to claim 18, **characterised by** the following steps:
g) removing the third lens blank (100c) from the workpiece holder (12) with the loading device (30) and loading a fourth lens blank (100d) into the workpiece holder (12) and machining the fourth lens blank (100d) with the milling tool (13) during the machining of the first and the second lens blank (100a, 100b) with the rotating tools (53a, 53b).

20. Method according to claim 19, **characterised by** the following steps:
h) removing the first and the second lens blank (100a, 100b) from the workpiece spindles (52a, 52b);
i) subsequently loading one of or the third and one of or the fourth lens blank (100c, 100d) into the workpiece spindles (52a, 52b) with the loading device (30) and loading a fifth lens blank (100e) into the workpiece holder (12);
j) repeating steps f) to i).

21. Method according to any one of claims 18 to 20 and to operate the rotating device (50), **characterised in that** the control electronics (54) adjusts the drive signals (S1a, S1b, S2, S3, S4a, S4b) to one another such that the drive signals (S4a, S4b) for the fast tool servomotors (75a, 75b) effect an at least temporary inverse operation of the fast tool servomotors (75a, 75b) for vibration damping.

## Revendications

1. **Dispositif de fabrication (1)** pour la fabrication de verres de lunettes à partir d'ébauches de lentilles (100a, 100b, 100c, 100d, 100e), avec un dispositif de fraisage (10) et un dispositif de tournage (50),
• dans lequel le dispositif de tournage (50) comporte un premier poste de tournage (51a) avec une première broche porte-pièce (52a) rotative destinée à loger une ébauche de lentille (100a, 100b, 100c, 100d, 100e) et un premier outil de tournage (53a) destiné à l'usinage par enlèvement de copeaux d'une ébauche de lentille (100a, 100b, 100c, 100d, 100e) logée, et dans lequel le dispositif de tournage (50) comporte au moins un deuxième poste de tournage (52b) avec une première broche porte-pièce (52b) rotative destinée à loger une deuxième ébauche de lentille (100a, 100b, 100c, 100d, 100e) et un deuxième outil de tournage (53b) destiné à l'usinage par enlèvement de copeaux d'une deuxième ébauche de lentille (100a, 100b, 100c, 100d, 100e) logée,
• dans lequel le dispositif de fraisage (10) comporte au moins un poste de fraisage (11) avec un porte-pièce (12) destiné à loger une ébauche de lentille (100a, 100b, 100c, 100d, 100e) et un outil de fraisage (13) destiné à l'usinage par enlèvement de copeaux de l'ébauche de lentille (100a, 100b, 100c, 100d, 100e) logée, et
• dans lequel il est prévu un dispositif de chargement (30) qui est conçu pour enlever des ébauches de lentilles (100a, 100b, 100c, 100d, 100e) du dispositif de fraisage (10) et de les charger dans les broches porte-pièce (52a, 52b).

2. Dispositif de fabrication (1) selon la revendication 1, **caractérisé en ce que** le dispositif de tournage (50) comporte 1,5 fois à 2,5 fois plus de postes de tournage (51a, 51b) que le dispositif de fraisage (10) comporte de postes de fraisage (11).

3. Dispositif de fabrication (1) selon l'une quelconque des revendications 1 ou 2, **caractérisé en ce que** le dispositif de fraisage (10) comporte exactement un poste de fraisage (11) et le dispositif de tournage (50) comporte exactement deux postes de tournage (51a, 51b).

4. Dispositif de fabrication (1) selon l'une quelconque des revendications 1 à 3, **caractérisé en ce que** le dispositif de fraisage (10) et le dispositif de tournage (50) comportent un châssis de machine commun et/ou un banc de machine (70) commun.

5. Dispositif de fabrication (1) selon l'une quelconque des revendications 1 à 3, **caractérisé en ce que** le dispositif de fraisage (10) et le dispositif de tournage (50) sont découplés quant aux oscillations, de préférence par des plaques de fondation séparées au-dessus du sol.

6. Dispositif de fabrication (1) selon l'une quelconque des revendications 1 à 5, **caractérisé en ce que** le dispositif de fraisage (10) et le dispositif de tournage (50) sont agencés dans une cellule de fabrication (71) commune.

7. Dispositif de fabrication (1) selon l'une quelconque des revendications 1 à 6, **caractérisé en ce que** le dispositif de fraisage (10) et le dispositif de tournage (50) sont agencés dans des espaces de travail séparés, lesquels espaces de travail sont séparés l'un de l'autre de préférence au moins quant au passage de copeaux.

8. Dispositif de fabrication (1) selon l'une quelconque des revendications 1 à 7, **caractérisé en ce que** le dispositif de chargement (30) comporte des moyens de transport (31) destinés à transporter une ébauche de lentille (100a, 100b, 100c, 100d, 100e) du poste de fraisage (11) aux postes de tournage (51a, 51b).

9. Dispositif de fabrication (1) selon l'une quelconque des revendications 1 à 8, **caractérisé en ce que** le dispositif de chargement (30) comporte un stockage de lentilles (32) pour au moins une ébauche de lentille (100a, 100b, 100c, 100d, 100e).

10. Dispositif de fabrication (1) selon l'une quelconque des revendications 1 à 9, **caractérisé en ce que** le dispositif de chargement (30) du dispositif de tournage (50) comporte pour chaque poste de tournage (52a, 52b) une paire de moyens de fixation (34) destinés à loger deux ébauches de lentilles (100a, 100b, 100c, 100d, 100e), dans lequel les moyens de fixation (34) des paires sont orientés de manière à former un angle l'un par rapport à l'autre et sont reliés ensemble et dans lequel les paires des moyens de fixation (34) sont logées rotatives autour d'un axe de rotation commun.

11. Dispositif de fabrication (1) selon l'une quelconque des revendications précédentes, **caractérisé en ce que** les broches porte-pièce (52a, 52b) du dispositif de tournage (50) comportent des axes de broches (A1, A2) orientés parallèlement.

12. Dispositif de fabrication (1) selon l'une quelconque des revendications précédentes, **caractérisé en ce que** les broches porte-pièce (52a, 52b) du dispositif de tournage (50) sont agencées dans un plan de broches (E1) commun.

13. Dispositif de fabrication (1) selon l'une quelconque des revendications précédentes, **caractérisé en ce que** les postes de tournage (51a, 51b) du dispositif de tournage (50), de préférence les broches porte-pièce (52a, 52b), comportent un entraînement transversal (73) commun avec lequel la distance (X1) des outils de tournage (53a, 53b) par rapport à l'axe de broche (A1, A2) d'une broche porte-pièce (52a, 52b) associée est modifiable.

14. Dispositif de fabrication (1) selon l'une quelconque des revendications précédentes, **caractérisé en ce que** les postes de tournage (51a, 51b) du dispositif de tournage (50), de préférence les broches porte-pièce (52a, 52b), comportent un entraînement linéaire (74) commun avec lequel la distance (X2) des outils de tournage (53a, 53b) par rapport à une broche porte-pièce (52a, 52b) associée est modifiable.

15. Dispositif de fabrication (1) selon l'une quelconque des revendications précédentes, **caractérisé en ce que** chaque outil de tournage (53a, 53b) du dispositif de tournage (50) comporte à chaque fois un servomoteur Fast Tool (75a, 75b) avec lequel la profondeur d'avance (T) par rapport à une broche porte-pièce (52a, 52b) associée est modifiable.

16. Dispositif de fabrication (1) selon les revendications 14 et 15, **caractérisé en ce que** l'entraînement linéaire (74) du dispositif de tournage (50) a une première course de réglage maximale et les servomoteurs Fast Tool (75a, 75b) ont une deuxième course de réglage maximale, la première course de réglage maximale correspondant à au moins 10 fois la deuxième course de réglage maximale.

17. Dispositif de fabrication (1) selon les revendications 13 à 15 ou 13 à 16, **caractérisé en ce que** le dispositif de tournage (50) comporte une électronique de commande (54) destinée à fournir des signaux d'entraînement (S1a, S1b, S2, S3, S4a, S4b) aux broches porte-pièce (52a, 52b), à l'entraînement transversal (73), à l'entraînement linéaire (74) et aux servomoteurs Fast Tool (75a, 75b), lesquels signaux d'entraînement (S1a, S1b, S2, S3, S4a, S4b) sont accordés les uns aux autres par l'électronique de commande (54).

18. **Procédé** de fonctionnement d'un dispositif de fabrication (1) selon l'une quelconque des revendications 1 à 17, **caractérisé par** les étapes suivantes :
a) chargement d'une première ébauche de lentille (100a) dans le porte-pièce (12) et usinage par enlèvement de copeaux de la première ébauche de lentille (100a) avec l'outil de fraisage (13) ;
b) puis enlèvement de la première ébauche de lentille (100a) du porte-pièce (12) avec le dispositif de chargement (30) ;
c) puis chargement d'une deuxième ébauche de lentille (100b) dans le porte-pièce (12) et usinage par enlèvement de copeaux de la deuxième ébauche de lentille (100b) avec l'outil de fraisage (13) ;
d) puis enlèvement de la deuxième ébauche de lentille (100b) du porte-pièce (12) avec le dispositif de chargement (30) ;
e) chargement de la première et de la deuxième ébauche de lentille (100a, 100b) dans les broches porte-pièce (52a, 52b) avec le dispositif de chargement (30) et chargement d'une troisième ébauche de lentille (100c) dans le porte-pièce (12) ;
f) usinage par enlèvement de copeaux, simultanément, de la troisième ébauche de lentille (100c) avec l'outil de fraisage (13) et de la première et de la deuxième ébauche de lentille (100a, 100b) avec les outils de tournage (53a, 53b).

19. Procédé selon la revendication 18, **caractérisé par** les étapes suivantes :
g) enlèvement de la troisième ébauche de lentille (100c) du porte-pièce (12) avec le dispositif de chargement (30) ainsi que chargement d'une quatrième ébauche de lentille (100d) dans le porte-pièce (12) et usinage par enlèvement de copeaux de la quatrième ébauche de lentille (100d) avec l'outil de fraisage (13) pendant l'usinage par enlèvement de copeaux de la première et de la deuxième ébauche de lentille (100a, 100b) avec les outils de tournage (53a, 53b).

20. Procédé selon la revendication 19, **caractérisé par** les étapes suivantes :
h) enlèvement de la première et de la deuxième ébauche de lentille (100a, 100b) des broches porte-pièce (52a, 52b) ;
i) puis chargement d'une ou de la troisième et d'une ou de la quatrième ébauche de lentille (100c, 100d) dans les broches porte-pièce (52a, 52b) avec le dispositif de chargement (30) et chargement d'une cinquième ébauche de lentille (100e) dans le porte-pièce (12) ;
j) répétition des étapes f) à i).

21. Procédé selon l'une quelconque des revendications 18 à 20 et pour le fonctionnement du dispositif de tournage (50), **caractérisé en ce que** l'électronique de commande (54) accorde les signaux d'entraînement (S1a, S1b, S2, S3, S4a, S4b) de telle manière les uns aux autres que les signaux d'entraînement (S4a, S4b) pour les servomoteurs Fast Tool (75a, 75b) provoquent un fonctionnement des servomoteurs Fast Tool (75a, 75b) au moins par intermittence en sens contraire afin d'atténuer les oscillations.
